# EUROPÄISCHE PATENTSCHRIFT

(11) **EP 3 658 441 B1**
(45) Veröffentlichungstag und Bekanntmachung des Hinweises auf die Patenterteilung: **23.02.2022**
(21) Anmeldenummer: 18746863.2
(22) Anmeldetag: 18.07.2018
(51) Int. Cl.: B62D 1/04

(54) **LENKVORRICHTUNG FÜR EIN KRAFTFAHRZEUG, VERFAHREN ZUM BETREIBEN EINER LENKVORRICHTUNG, STEUEREINRICHTUNG, UND KRAFTFAHRZEUG**
STEERING DEVICE FOR A MOTOR VEHICLE, METHOD FOR OPERATING A STEERING DEVICE, CONTROL UNIT, AND MOTOR VEHICLE
DISPOSITIF DE DIRECTION POUR VÉHICULE AUTOMOBILE, PROCÉDÉ PERMETTANT DE FAIRE FONCTIONNER UN DISPOSITIF DE DIRECTION, DISPOSITIF DE COMMANDE, ET VÉHICULE AUTOMOBILE

(30) Priorität: 24.07.2017 DE 102017212686
(43) Veröffentlichungstag der Anmeldung: 03.06.2020
(73) Patentinhaber: Audi AG, 85045 Ingolstadt (DE)
(72) Erfinder: REDEKER, Immo, 85051 Ingolstadt (DE); HÉLOT, Jacques, 85051 Ingolstadt (DE); MERTENS, Joris, 85051 Ingolstadt (DE)
(86) Internationale Anmeldenummer: PCT/EP2018/069541
(87) Internationale Veröffentlichungsnummer: WO 2019/020465

(56) Entgegenhaltungen:
- WO-A1-2018/060443
- DE-A1-102013 110 865
- DE-A1-102015 207 477
- TW-A- 200 642 888

## Beschreibung

Die Erfindung betrifft eine Lenkvorrichtung für ein Kraftfahrzeug, und ein Verfahren zum Betreiben einer Lenkvorrichtung eines Kraftfahrzeugs. Die erfindungsgemäße Lenkvorrichtung weist eine Lenkhandhabe auf, beispielsweise ein Lenkrad, und eine Verstelleinrichtung zum Wechseln zwischen einer Gebrauchsposition der Lenkhandhabe und einer Ruheposition der Lenkhandhabe, wobei die Lenkhandhabe die Ruheposition vorzugsweise während eines pilotierten Fahrmodus einnehmen kann. Die Gebrauchsposition kann dabei auch als Gebrauchslage oder Bereitschaftsposition oder Betriebsposition bezeichnet werden, die Ruheposition als Ruhelage.

Moderne Kraftfahrzeuge, die nur in einem pilotierten Fahrmodus betrieben werden können, benötigen keine Lenkhandhabe mehr und dadurch ergibt sich der Vorteil, dass im Innenraum des Kraftfahrzeugs mehr Platz für jeden Insassen ist. Ein rein pilotiertes Fahren, das auch als autonomes Fahren bezeichnet werden kann, ist jedoch zumindest bisher noch nicht flächendeckend möglich, weswegen in der Praxis solche Kraftfahrzeuge bevorzugt verwendet werden, die sowohl in einem pilotierten Fahrmodus, als auch in einem teilautonomen oder manuellen Modus betrieben werden können. In einem teilautonomen Fahrmodus, insbesondere in einem manuellen Fahrmodus, übernimmt einer der Insassen, der Fahrer, die Lenkung und benötigt hierzu eine Lenkvorrichtung. Als Lenkvorrichtung wird dabei ein Gerät oder eine Bauteilkombination zum Beeinflussen der Quersteuerung des Kraftfahrzeugs verstanden.

Das manuelle Steuern des Kraftfahrzeugs, das auch analoges oder aktives Steuern bezeichnet werden kann, wird unter Umständen in Zukunft weniger Beachtung finden, weshalb es wichtig wird, den Innenraum beim Fahren in einem autonomen Fahrmodus ohne ein klassisches Lenkrad zu gestalten. In vielen Kraftfahrzeugen werden Unterschiede zwischen einem pilotierten und einem zumindest teilweise manuellen Fahrmodus geometrisch wenig oder nicht thematisiert, d.h. der Fahrer ist auch im pilotierten Fahrmodus in seiner Bewegungsfreiheit eingeschränkt. In herkömmlichen Kraftfahrzeugen ist dabei die Lenkhandhabe statisch verbaut. Solche statischen Bauräume werden also vorgehalten, obwohl sie in pilotierten Fahrmodus nicht benötigt werden. Platz im Innenraum wird dadurch verschwendet, da die Lenkhandhabe auch im pilotierten Fahrmodus sehr prominent vorhanden ist. Da die Lenkhandhabe immer griffbereit zu Verfügung steht, muss der Benutzer sich unter Umständen über ein Bordsystem erkundigen, ob der pilotierte Fahrmodus noch angeschaltet ist.

Die TW 2006 642 888 A beschreibt eine Lenkvorrichtung mit einer verschwenkbaren Lenkhandhabe, wobei die Lenkhandhabe in der Gebrauchsposition zum Lenken des Kraftfahrzeugs durch den Benutzer angeordnet ist, und wobei die Lenkhandhabe in der Ruheposition so angeordnet ist, dass eine in der Gebrauchsposition dem Benutzer abgewandte Oberfläche der Lenkhandhabe dem Benutzer zugewandt ist und wobei ein Anzeigeelement auf der in Gebrauchsposition dem Benutzer abgewandten Seite der Lenkhandhabe angeordnet ist.

Die DE 10 2015 207 477 A1 beschreibt eine Anordnung eines Lenkrads in einem für autonomes Fahren geeigneten Kraftfahrzeug, wobei das Lenkrad aus einer Gebrauchsposition in eine Ruhelage verschwenkt ist, in welcher der Fahrer des Fahrzeugs weiterhin einen Lenkwunsch durch das Lenkrad vorgeben kann und wobei ein Verschwenken des Lenkrads aus der Gebrauchsposition in die Ruhelage einen autonomen Fahrzeug-Betriebsmodus, in welchem sich das Fahrzeug ohne Zutun des Fahrers entlang der Fahrbahn bewegt, einschaltet.

Ähnlich beschreibt die DE 10 2013 110 865 A1 ein Verfahren für ein Fahrerassistenzsystem eines Fahrzeugs, wobei Lenkrad manuell zwischen einer ersten Position und einer zweiten Position verstellbar ist. Eine Position des Lenkrads wird erfasst und in Abhängigkeit von der Position des Lenkrads wird das Fahrerassistenzsystem eingestellt. Somit offenbart das Dokument

DE 10 2013 110 865 A1 ein Verfahren zum Betreiben einer Lenkvorrichtung, das Verfahren umfassend die folgenden, durch eine Steuereinrichtung durchgeführten Schritte: Empfangen eines Bediensignals aus einer Bedieneinrichtung; in Abhängigkeit von dem empfangenen Bediensignal Erzeugen eines Steuersignals, das einen einzustellenden Fahrmodus durch eine Fahrerassistenzeinrichtung beschreibt; und Übertragen des erzeugten Steuersignals an die Fahrerassistenzeinrichtung und dadurch Einstellen des durch das Steuersignal beschriebenen Fahrmodus; das Verfahren weiterhin aufweisend den Schritt: Erzeugen eines Verstellsignals, das einen Wechsel zwischen einer Gebrauchsposition der Lenkhandhabe und einer Ruheposition der Lenkhandhabe beschreibt.

Die DE 10 2006 006 995 A1 beschreibt ein Kraftfahrzeug mit einem Lenkrad und einem ein- und ausschaltbaren Autopilotsystem, wobei das Lenkrad in Abhängigkeit des Betriebszustands des Autopilot-Systems zwischen einer geometrisch kleinen Form bei eingeschaltetem Autopilotsystem und einer geometrisch großen Form bei ausgeschaltetem Autopiloten-System automatisch verstellbar ist. Hierdurch ergibt sich jedoch nur eine sehr geringfügige Änderung des verfügbaren Platzes, und der Benutzer des Kraftfahrzeugs hat in einem pilotierten Fahrmodus keinen Komfortvorteil, da die Lenkhandhabe weiterhin in seinen Sitzbereich hineinragt.

Bei einer Lenkhandhabe, bei denen nicht nur die Griffe, sondern die ganze Lenkhandhabe verstellt wird, ergibt sich der Vorteil, dass der Fahrer mehr Platz auf seinem Sitz hat. Nachteilig ist hierbei jedoch, dass die verschwenkte Lenkhandhabe in der Ruhelage einen Bereich des Armaturenbretts verdeckt, sodass beispielsweise ein Bildschirm des Armaturenbretts nicht mehr genutzt werden kann, obwohl der Benutzer gerade im pilotierten Fahrmodus die Möglichkeit haben möchte, während der Fahrt mithilfe eines Informationssystems des Kraftfahrzeugs zum Beispiel Emails zu schreiben oder einen Film anzuschauen.

Eine der Erfindung zu Grunde liegende Aufgabe ist das Verbessern der Nutzungsmöglichkeiten eines Informationssystems eines Kraftfahrzeugs, das im pilotiert Fahrmodus fährt.

Die gestellte Aufgabe wird durch die erfindungsgemäßen Vorrichtungen und das erfindungsgemäße Verfahren gemäß der beigefügten Patentansprüche gelöst. Vorteilhafte Weiterbildungen sind durch die Unteransprüche gegeben.

Die Erfindung basiert auf der Idee, die Lenkhandhabe in Abhängigkeit von einem aktuellen Fahrmodus zu verstellen. Die erfindungsgemäße Lenkvorrichtung weist zudem ein Anzeigeelement an einer in der Gebrauchsposition der Lenkhandhabe einem Benutzer abgewandten Oberfläche der Lenkhandhabe auf. Mit anderen Worten kann der Benutzer in einem manuellen oder teilautonomen Fahrmodus, in dem die Lenkhandhabe in einer Gebrauchsposition ist, das Anzeigeelement nicht sehen und/oder nicht benutzen kann, nach Aktivieren eines pilotierten Fahrmodus und nach einem Verstellen der Lenkhandhabe in eine Ruheposition oder Ruhelage, in der das Anzeigeelement dem Benutzer zugewandt ist, das Anzeigeelement benutzen. Vorteilhaft ergibt sich ein neuartiges Erscheinungsbild im Innenraum des Kraftfahrzeugs und eine neue Bauraumaufteilung und Bauraumverteilung. Die Erfindung ist eine innovative Lösung, um mehr Platz im Innenraum zu schaffen. Neben einem neuartigen Unterscheidungspotenzial zu Mitbewerbern des Kraftfahrzeugherstellers wird außerdem eine Fahrsicherheit erhöht, weil die Lenkhandhabe im pilotierten Fahrmodus nicht mehr aus Versehen von dem Benutzer ergriffen und benutzt werden kann, und damit nicht aus Versehen der pilotierte Fahrmodus abgebrochen wird.

Die erfindungsgemäße Lenkvorrichtung für ein Kraftfahrzeug weist eine Lenkhandhabe auf, beispielsweise ein Lenkrad oder Steuerhebel, die eine Stirnseite aufweist, wobei die Stirnseite in einer Gebrauchsposition der Lenkhandhabe einem Benutzer zugewandt ist.

In einem im Kraftfahrzeug verbauten Zustand ist die Lenkhandhabe in der Gebrauchsposition bedienbereit und zum Empfangen einer Bedienhandlung zum Lenken des Kraftfahrzeugs durch den Benutzer angeordnet. In der Ruheposition oder Ruhelage ist die Lenkhandhabe derart angeordnet, dass die von der Stirnseite abgewandte Oberfläche der Lenkhandhabe dem Benutzer zugewandt ist.

Die Lenkvorrichtung ist hat weiterhin ein Anzeigeelement, wobei unter einem Anzeigeelement ein Bauteil mit einer Anzeigefläche, also beispielsweise ein Bildschirm, verstanden wird. Das Anzeigeelement der erfindungsgemäßen Lenkvorrichtung ist an einer von der Stirnseite abgewandten Seite der Lenkhandhabe angeordnet, beispielsweise an einer Unterseite der Lenkhandhabe. Dadurch ist das Anzeigeelement der im Kraftfahrzeug verbauten Lenkhandhabe an einer in der Gebrauchsposition dem Benutzer der

Lenkhandhabe abgewandten Oberfläche der Lenkhandhabe angeordnet.

Die Lenkvorrichtung ist gekennzeichnet durch eine Verstelleinrichtung, wobei unter einer Verstelleinrichtung ein Gerät oder eine Gerätekomponente zum Verstellen eines anderen Bauteils oder einer anderen Bauteilgruppe verstanden wird. Die Verstelleinrichtung ist zum Wechseln zwischen einer Gebrauchsposition der Lenkhandhabe und einer Ruheposition der Lenkhandhabe durch Verschwenken der Lenkhandhabe eingerichtet.

Die Lenkvorrichtung ist weiterhin durch eine Steuereinrichtung gekennzeichnet, die dazu eingerichtet ist: ein Bediensignal aus einer Bedieneinrichtung zu empfangen; in Abhängigkeit von dem empfangenen Bediensignal ein Steuersignal zu erzeugen, das einen einzustellenden Fahrmodus durch eine Fahrerassistenzeinrichtung beschreibt; das erzeugte Steuersignal an die Fahrerassistenzeinrichtung zu übertragen und dadurch den durch das Steuersignal beschriebenen Fahrmodus einzustellen; ein Verstellsignal zu erzeugen, das einen Wechsel zwischen einer Gebrauchsposition der Lenkhandhabe und einer Ruheposition der Lenkhandhabe durch Verschwenken der Lenkhandhabe beschreibt; das erzeugte Verstellsignal an die Verstelleinrichtung zu übertragen; in Abhängigkeit von dem eingestellten Fahrmodus ein Anzeigesignal zum Aktivieren eines Anzeigeelements der Lenkhandhabe zu erzeugen; und das erzeugte Anzeigesignal an eine Anzeigeeinrichtung des Kraftfahrzeugs oder an das Anzeigeelement zu übertragen.

Es ergeben sich die oben beschriebenen Vorteile. Zusätzlich zu einem bereits vorhandenen Anzeigeelement des Kraftfahrzeugs, das nicht an der Lenkhandhabe angeordnet ist, beispielsweise ein Bildschirm des Kombiinstruments, der in einer Mittelkonsole oder in einer Instrumententafel angeordnet sein kann, können durch das Anzeigeelement der Lenkhandhabe zusätzliche Informationen oder beispielsweise ein Unterhaltungsprogramm angezeigt werden. Bei der Verwendung der Lenkhandhabe in einem pilotierten Fahrmodus, in dem die Lenkhandhabe nicht zum Lenken des Kraftfahrzeugs benötigt wird, kann der Benutzer die Lenkhandhabe also zur Unterhaltung nutzen. Außerdem wird zum Beispiel ein Bildschirm, der durch die Ruheposition der Lenkhandhabe verdeckt sein kann, ersetzt.

Vorzugsweise kann dabei eine Verschwenkachse, um die die Lenkhandhabe verschwenkt, also zum Beispiel rotiert oder gekippt werden kann, eine Kraftfahrzeughochachse schneiden und in einer Ebene verlaufen, die durch eine Kraftfahrzeug-Längsachse und eine Kraftfahrzeug-Querachse gebildet wird. Vorzugsweise kann die Lenkvorrichtung ein an der Lenkhandhabe angeordnetes Bedienelement zum Empfangen einer Bedienhandlung des Benutzers aufweisen, wobei die Bedienhandlung zum Ändern eines Fahrmodus des Kraftfahrzeugs durch eine Fahrerassistenzeinrichtung sein kann. Unter einer Fahrerassistenzeinrichtung wird ein Gerät oder eine Gerätekomponente zum Betreiben des Kraftfahrzeugs in unterschiedlichen Fahrmodi verstanden und kann beispielsweise als Fahrerassistenzsystem ausgestaltet sein. Ein derart angeordnetes Bedienelement steht in einem thematischen Kontext zu der Übertragung der Lenkaufgabe an die Fahrerassistenzeinrichtung, weswegen der Benutzer die Fahrerassistenzeinrichtung intuitiver bedienen kann und mehr Aufmerksamkeit dem aktuellen Fahrgeschehen widmen kann.

Die oben gestellte Aufgabe wird, unter Erreichen der bereits genannten Vorteile, gelöst durch ein Verfahren zum Betreiben der Lenkvorrichtung nach einer der beschriebenen Ausführungsformen der Lenkvorrichtung, wobei das Verfahren die folgenden, durch eine Steuereinrichtung durchgeführten Schritte aufweist. Unter einer Steuereinrichtung wird dabei ein Gerät oder eine Gerätekomponente zum Empfangen und Auswerten von Signalen, sowie zum Erzeugen von Steuersignalen, verstanden. Die Steuereinrichtung kann beispielsweise als Steuergerät oder Steuerplatine ausgestaltet sein. Zunächst erfolgt ein Empfangen eines Bediensignals aus einer Bedieneinrichtung, also aus einem Gerät oder einer Gerätekomponente zum Empfangen von Bedienhandlungen und zum Erzeugen eines jeweiligen Bediensignals, das die Bedienhandlung und/oder eine durch die Bedienhandlung auszulösende Funktion beschreibt. Die Bedieneinrichtung kann zum Beispiel ein Bauteil zum direkten Empfangen der Bedienhandlung aufweisen, beispielsweise das bereits oben genannte Bedienelement, das beispielsweise als Taster oder berührungssensitive Oberfläche eines Bildschirms ausgestaltet sein kann.

In Abhängigkeit von dem empfangenen Bediensignal erfolgt ein Erzeugen eines Steuersignals, das einen einzustellenden Fahrmodus durch die Fahrerassistenzeinrichtung beschreibt. Es folgt ein Übertragen des erzeugten Steuersignals an die Fahrerassistenzeinrichtung und dadurch ein Einstellen des durch das Steuersignal beschriebenen Fahrmodus.

Es erfolgt ein Erzeugen eines Verstellsignals, das einen Wechsel zwischen der Gebrauchsposition der Lenkhandhabe und der Ruheposition der Lenkhandhabe durch Verschwenken der Lenkhandhabe beschreibt, wobei die Lenkhandhabe in der Gebrauchsposition bedienbereit zum Empfangen einer Bedienhandlung zum Lenken des Kraftfahrzeugs durch den Benutzer angeordnet ist, und wobei die Lenkhandhabe in der Ruheposition derart angeordnet ist, dass eine in der Gebrauchsposition dem Benutzer abgewandte Oberfläche der Lenkhandhabe dem Benutzer zugewandt ist. Es folgt ein Übertragen des Verstellsignals an die Verstelleinrichtung.

Es ergeben sich dir bereits oben genannten Vorteile. In der Gebrauchsposition, also vorzugsweise im teilweise autonomen oder manuellen Fahrmodus, steht das Anzeigeelement nicht zur Verfügung, d.h. das Anzeigeelement der Lenkhandhabe kann den Benutzer nicht ablenken, so dass dieser sich besser auf das Fahrgeschehen konzentrieren kann. In der Ruheposition der Lenkhandhabe, also wenn sich der Benutzer sowieso nicht auf das Lenken konzentrieren muss, kann der Benutzer das Anzeigeelement nutzen.

Vorzugsweise kann, falls der durch das erzeugte Steuersignal beschriebene und durch die Fahrerassistenzeinrichtung eingestellte Fahrmodus ein pilotierter Fahrmodus ist, das erzeugte Steuersignal einen Wechsel der Lenkhandhabe von der Gebrauchsposition in die Ruheposition beschreiben. Falls der eingestellte Fahrmodus ein nur teilweise autonomer Fahrmodus oder ein manueller Fahrmodus ist, kann das erzeugte Steuersignal einen Wechsel der Lenkhandhabe von der Ruheposition in die Gebrauchsposition beschreiben. Vorteilhaft steht die Lenkhandhabe in einem Fahrmodus, in dem der Benutzer die Lenkhandhabe braucht, einsatzbereit zur Verfügung, und im pilotierten Modus, in dem die Lenkhandhabe nicht benötigt wird, nimmt diese weniger Platz im Sitzbereich des Benutzers in Anspruch.

Gemäß einer bevorzugten Ausführungsform des erfindungsgemäßen Verfahrens kann der durch das Verstellsignal beschriebene Wechsel zwischen der Gebrauchsposition und der Ruheposition ein Verschwenken, also beispielsweise ein Hochklappen oder ein Rotieren, der Lenkhandhabe entlang einer eine Kraftfahrzeug-Längsachse und eine Kraftfahrzeughochachse schneidenden Verschwenkachse erfolgen, die vorzugsweise in einer Ebene verlaufen kann, die durch die Kraftfahrzeug-Längsachse und die Kraftfahrzeug-Querachse gebildet wird. Vorzugsweise kann dabei die Verschwenkachse parallel zu der Kraftfahrzeug-Querachse oder im Wesentlichen parallel zu der Kraftfahrzeug-Querachse verlaufen. Hierdurch kann die Lenkhandhabe in der Ruheposition besonders platzsparend gelagert werden, und das Anzeigeelement kann von dem Benutzer genutzt werden, insbesondere falls es sich bei der Lenkhandhabe um eine Lenkhandhabe mit einem weiter oben beschriebenen Anzeigeelement handelt.

Als weitere Maßnahme, um die Nutzung des Anzeigeelements nur dann zur

Verfügung zu stellen, wenn der Benutzer nicht lenken muss, erzeugt die Steuereinrichtung in Abhängigkeit von dem eingestellten Fahrmodus ein Anzeigesignal zum Aktivieren des Anzeigeelements der Lenkhandhabe erzeugen, vorzugsweise falls der pilotierte Fahrmodus eingestellt wird. Es folgt ein Übertragen des erzeugten Anzeigesignals an eine Anzeigeeinrichtung des Kraftfahrzeugs oder an das Anzeigeelement. Unter einer Anzeigeeinrichtung wird ein Gerät oder eine Gerätekomponente zum Anzeigen von Anzeigeinhalten, also zum Beispiel von Bildern, verstanden, die das Anzeigeelement umfassen kann.

Die oben gestellte Aufgabe wird gelöst durch eine Steuereinrichtung, die dazu eingerichtet ist, ein Verfahren nach einer der oben beschriebenen Ausführungsformen des erfindungsgemäßen Verfahrens durchzuführen. Die Steuereinrichtung kann beispielsweise als Steuergerät oder Steuerplatine ausgestaltet sein. Vorzugsweise kann die Steuereinrichtung eine Prozessoreinrichtung aufweisen, also ein Gerät oder Bauteil zur elektronischen Datenverarbeitung. Die optionale Prozessoreinrichtung kann beispielsweise mindestens einen Mikroprozessor und/oder mindestens einen Mikrokontroller aufweisen. Die Prozessoreinrichtung kann dazu eingerichtet sein, einen Programmcode auszuführen, der auf einem Datenspeicher gespeichert und dazu eingerichtet sein kann, bei Ausführen durch die Prozessoreinrichtung die Steuereinrichtung dazu zu veranlassen, das erfindungsgemäße Verfahren durchzuführen.

Die oben gestellte Aufgabe wird gelöst durch ein Kraftfahrzeug, das durch eine Ausführungsform der erfindungsgemäßen Lenkvorrichtung gekennzeichnet ist. Das Kraftfahrzeug kann vorzugsweise als Kraftwagen ausgestaltet sein, beispielsweise als Personenkraftwagen.

Das Anzeigeelement ist in einer Gebrauchsposition der Lenkhandhabe an einer einem Benutzer abgewandten Oberfläche der Lenkhandhabe angeordnet. Vorzugsweise kann eine Anzeigeeinrichtung des Kraftfahrzeugs das beschriebene Anzeigeelement und mindestens ein weiteres Anzeigeelement aufweisen, das in der Gebrauchsposition der Lenkhandhabe durch die Lenkhandhabe zumindest teilweise verdeckt und in der Ruheposition der Lenkhandhabe dem Benutzer zugänglich sein kann. Das weitere Anzeigeelement kann dabei vorzugsweise an einer Position eines Innenraumverkleidungselements des Kraftfahrzeugs angeordnet sein, die in der Gebrauchsposition der Lenkhandhabe durch die Lenkhandhabe zumindest teilweise verdeckt sein kann.

Ein solches weiteres Anzeigeelement kann beispielsweise an einem unteren Bereich eines Armaturenbretts, der im manuellen Modus durch die Lenkhandhabe zumindest teilweise verdeckt sein kann, angeordnet sein. Hierdurch werden dem Benutzer im pilotierten Fahrmodus noch mehr Anzeigemöglichkeiten zur Verfügung gestellt, die er beispielsweise zum Anschauen eines Panoramabildes oder für eine Videokonferenz nutzen kann. Befindet sich die Lenkhandhabe in der Gebrauchsposition, wird ein solches zusätzliches Anzeigeelement zumindest teilweise verdeckt und kann von dem Benutzer im manuellen oder teilautonomen Fahrmodus nicht genutzt werden, sodass eine Fahrsicherheit erhöht wird. Es ergeben sich weiterhin die bereits oben genannten Vorteile.

Vorzugsweise kann das Kraftfahrzeug eine Verstelleinrichtung zum Wechseln zwischen einer Gebrauchsposition der Lenkhandhabe und einer Ruheposition der Lenkhandhabe durch Verschwenken der Lenkhandhabe aufweisen. Auch hier ergeben sich die bereits genannten Vorteile.

Im Folgenden sind Ausführungsbeispiele der Erfindung beschrieben. Hierzu zeigt:
- Fig. 1: eine schematische Darstellung zu einer ersten Ausführungsform des erfindungsgemäßen Verfahrens und zu einer ersten Ausführungsform der erfindungsgemäßen Lenkvorrichtung; und
- Fig. 2: eine weitere schematische Darstellung zu der Ausführungsform des erfindungsgemäßen Verfahrens und zu der Ausführungsform der erfindungsgemäßen Lenkvorrichtung.

In den Figuren sind funktionsgleiche Elemente jeweils mit denselben Bezugszeichen versehen.

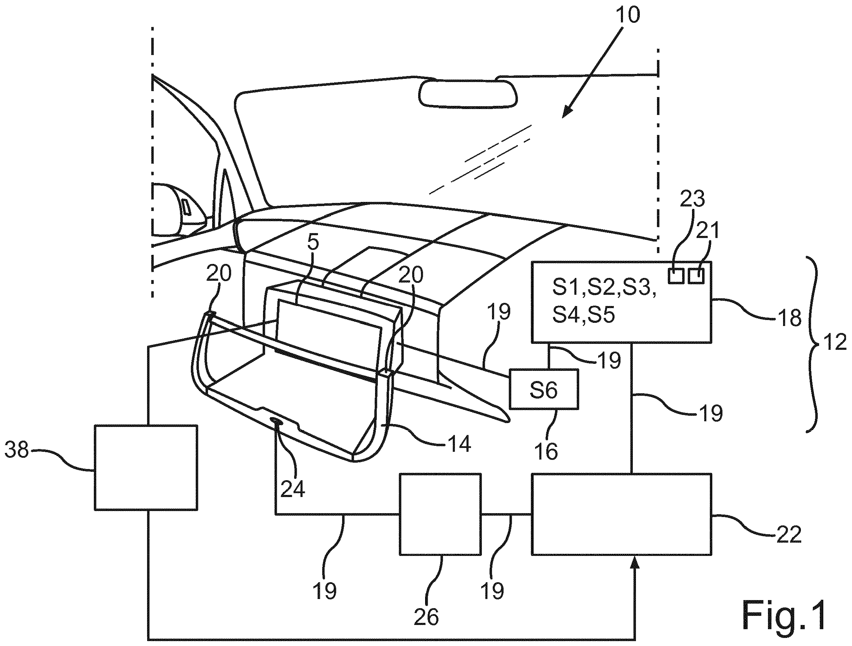

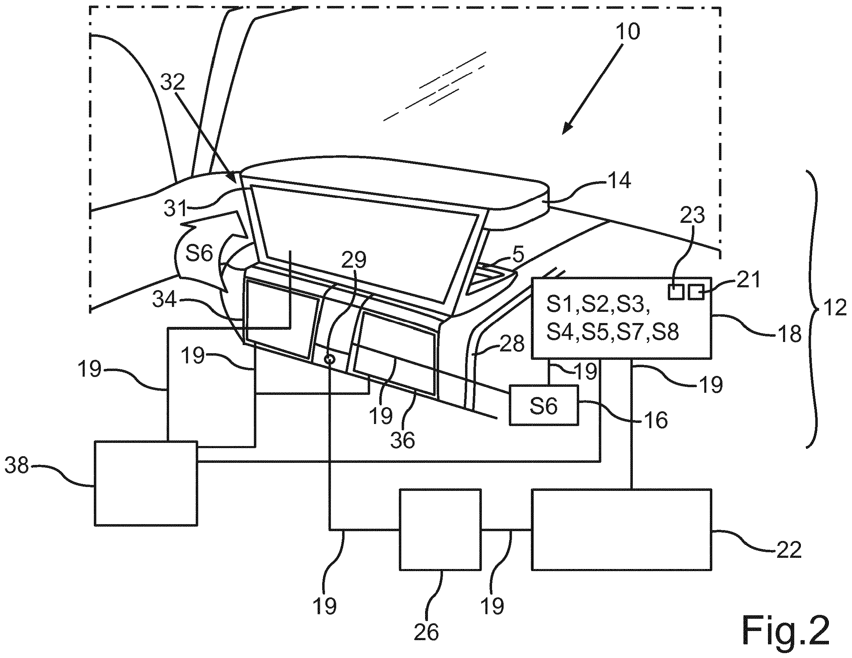

Die Fig. 1 und in die Fig. 2 zeigen eine Ausführungsbeispiel des erfindungsgemäßen Verfahrens, anhand dessen das Prinzip des erfindungsgemäßen Verfahrens erläutert wird. Hierzu zeigen die Figuren ein Kraftfahrzeug 10, das beispielsweise als Personenkraftwagen ausgestaltet sein kann.

Das Kraftfahrzeug 10 weist eine Lenkvorrichtung 12 auf, wobei die Lenkvorrichtung 12 eine Lenkhandhabe 14 und, in den Beispielen der Fig. 1 und der Fig. 2, optional eine Verstelleinrichtung 16 und optional eine Steuereinrichtung 18 aufweisen kann. Die Lenkvorrichtung 12 kann optional zum Beispiel zusätzlich ein Lenkgetriebe, eine Lenksäule und eine Spurstange aufweisen, die jedoch aus Gründen der Übersichtlichkeit in den Figuren nicht gezeigt sind. Vorzugsweise kann die Lenkvorrichtung 12 dabei als Steer-by-wire-Lenkung ausgestaltet sein.

Die Lenkhandhabe 14 kann vorzugsweise als Lenkrad ausgestaltet sein. Die Lenkhandhabe 14 der Figuren kann dabei beispielsweise zwei Griffe 20 umfassen. In der Fig. 1 ist ein beispielhaftes, optionales Anzeigeelement 5 gezeigt, das in der Gebrauchsposition der Lenkhandhabe 14 sichtbar sein und zum Beispiel, wie in der Fig. 1 gezeigt, an einer Stirnseite der Lenkhandhabe 14 angeordnet sein kann. Auf diesem Anzeigeelement 5 kann der Benutzer beispielsweise während der Fahrt durch ein Kombiinstrument angezeigte Parameter, wie beispielsweise eine Geschwindigkeit oder eine Drehzahl, ablesen.

Die Verstelleinrichtung 16 kann beispielsweise einen Motor zum Verstellen der Lenkhandhabe 14 aufweisen, wozu beispielsweise die Lenkhandhabe 14 entlang einer Schiene verschoben oder zum Beispiel über ein Gelenk oder einen Seilzug hochgeklappt oder rotiert werden kann.

Alternativ oder zusätzlich kann die Lenkhandhabe 14 an einer Doppelachse jeweils an einer Führung entlang schwenkt oder rotiert werden, wobei beispielsweise jede der Führungen an einer Seite des Gelenks der Lenkhandhabe 14 angeordnet sein kann.

Im Beispiel der Fig. 1 und der Fig. 2 ist dabei eine Datenkommunikationsverbindung 19 der Verstelleinrichtung 16 zu beispielsweise einem Gelenk gezeigt, mittels derer das Verstellsignal oder ein elektrischer Impuls übertragen werden kann.

Die Steuereinrichtung 18 kann beispielsweise als Steuerchip oder Steuerplatine mit einem Schaltkreis ausgestaltet sein, und mit einer Datenkommunikationsverbindung 19 mit der Verstelleinrichtung 16 verbunden sein. Eine solche Datenkommunikationsverbindung 19 kann beispielsweise eine drahtlose Datenkommunikationsverbindung 19 sein, beispielsweise eine WLAN- oder Bluetooth-Verbindung, oder eine drahtgebundene Datenkommunikationsverbindung 19, beispielsweise ein Datenbus eines Datenbussystems des Kraftfahrzeugs 10.

Die Steuereinrichtung 18 kann optional ein Steuergerät des Kraftfahrzeugs 10 sein. Die Steuereinrichtung 18 aus dem Beispiel der Figuren weist eine optionale Prozessoreinrichtung 23 und eine optionale Datenspeicher 21 auf. Auf dem Datenspeicher 21, beispielsweise ein Speicherchip oder eine Speicherkarte, kann beispielsweise ein Programmcode zum Durchführen des erfindungsgemäßen Verfahrens abgelegt sein.

Zusätzlich zeigen die Fig. 1 und die Fig. 2 eine optionale Fahrerassistenzeinrichtung 22, die beispielsweise als Bordsystem oder Fahrerassistenzsystem des Kraftfahrzeugs 10 ausgestaltet sein kann. Im Beispiel der Fig. 1 kann die Lenkhandhabe 14 optional ein Bedienelement 24 aufweisen, das beispielsweise mit der Bedieneinrichtung 26 des Kraftfahrzeugs verbunden sein kann. Eine solche Bedieneinrichtung 26 des Kraftfahrzeugs 10 kann beispielsweise eine Benutzerschnittstelle des Kraftfahrzeugs 10 sein, und das beispielhafte Bedienelement 24 der Fig. 1 kann beispielsweise als Tastatur zum Auslösen eines pilotierten Fahrmodus umfassen. Beispielsweise durch Drücken oder Berühren des Bedienelements 24 kann die Fahrerassistenzeinrichtung 22 den pilotierten Fahrmodus einstellen.

In der Fig. 2 ist ein weiteres, optionales Bedienelement 29 gezeigt, das beispielsweise an einem Innenraumverkleidungselements 28 des Kraftfahrzeugs 10 angeordnet sein kann, vorzugsweise an einer Position oder Lage des Innenraumverkleidungselements 28, wo das weitere, optionale Bedienelement 29 nur in einem hochgeklappten Zustand der Lenkhandhabe 14 zu sehen oder gut bedienbar sein kann. Das weitere, optionale Bedienelement 29 kann beispielsweise zum Wechseln von dem pilotierten Fahrmodus in einen manuellen oder teilweise autonomen Fahrmodus programmiert werden.

In der Fig. 2 ist ein erstes Anzeigeelement 31 gezeigt, das an einer Unterseite 32 der Lenkhandhabe 14 angeordnet ist, und hierzu beispielsweise in eine Hülle oder Bespannung der Lenkhandhabe 14 eingenäht oder auf die Lenkhandhabe 14 aufgeklebt sein kann. Das Anzeigeelement 31 kann beispielsweise als berührungssensitiver Bildschirm oder zum Beispiel als LCD-Bildschirm oder OLED-Bildschirm oder nicht reflektierender OLED-Bildschirm ausgestaltet sein. Optional können in einem analogen Fahrmodus, also in einem manuellen oder teilweise autonomen Fahrmodus, ein durch die Lenkhandhabe 14 verdeckter Bereich des Innenraumverkleidungselements 28 optional noch weitere Anzeigeelemente 34, 36 aufweisen. Dabei kann es sich jeweils beispielsweise um einen Fachmann aus dem Stand der Technik bekannten Bildschirm handeln.

Dabei kann das Anzeigeelement 31, das beispielsweise auch als Anzeigefläche bezeichnet werden kann, zum Beispiel ein qualitativ sehr hochwertiger Bildschirm sein und optional mit den weiteren, optionalen Anzeigeelementen 34, 36 gekoppelt sein.

Die Anzeigeelemente 31, 34, 36 können beispielsweise Bauteile einer Anzeigeeinrichtung 38 des Kraftfahrzeugs 10 sein, wobei die Anzeigeeinrichtung 38 beispielsweise eine Steuerplatine zum koordinierende der Anzeigeelemente 31, 34, 36 aufweisen kann, die beispielsweise in einer Mittelkonsole Kraftfahrzeugs 10 angeordnet sein kann.

Die entsprechenden Datenkommunikationsverbindungen 19 zum Steuern der Anzeigeelemente 31, 34, 36 können beispielsweise in dem Innenraumverkleidungselements 28 gelagert sein, und die Datenkommunikationsverbindung 19 für das Anzeigeelement 31 der Lenkhandhabe 14 kann beispielsweise durch einen Kanal oder eine andersartige Ausnehmung durch das beispielhafte Gelenk der Lenkvorrichtung 12 geführt werden.

Das Anzeigeelement 31 und/oder die weiteren, optionalen Anzeigeelemente 34, 36 können optional für einen Video-Chat mit Insassen eines anderen Kraftfahrzeugs oder zum Anschauen eines Panoramabildes genutzt werden. Die weiteren, optionalen Anzeigeelemente 34, 36 können eine weitere Ebene zum Anzeigen von Anzeigeinhalten bereitstellen.

Die Fig. 1 zeigt die Lenkhandhabe 14 in einer Gebrauchsposition oder Gebrauchslage, beispielsweise wenn das Kraftfahrzeug 10 in einem analogen Fahrmodus, also in einem manuellen Fahrmodus fährt, oder in einem teilautonomen Fahrmodus. Der Benutzer steuert das Kraftfahrzeug 10 mittels der Lenkhandhabe 14, die auch als Lenkeinheit bezeichnet werden kann.

In einem ersten Verfahrensschritt S1 (Fig. 1) empfängt die Steuereinrichtung 18 ein Bediensignal aus der Bedieneinrichtung 26, das beispielsweise eine durch das Bedienelement 24 empfangene Bedienhandlung, ein beispielhaftes Drücken auf das Bedienelement 24, beschreiben kann. Es kann vorgesehen sein, dass dieser Bedienhandlung ein Aktivieren eines pilotierten Fahrmodus zugeordnet ist. Daraufhin erzeugt die Steuereinrichtung 18 im Verfahrensschritt S2 ein Steuersignal, das den einzustellenden Fahrmodus, den beispielhaften pilotierten Fahrmodus, beschreibt, und überträgt das erzeugte Steuersignal über den beispielhaften Datenbus an das Fahrerassistenzsystem 22 (S3).

Optional kann zum Beispiel vorgesehen sein, dass das Auslösen dieses Wechseln des Fahrmodus bedingt, dass der Benutzer beispielsweise 5 Sekunden lang auf das Bedienelement 24 drückt.

Vorzugsweise sobald der pilotierte Fahrmodus durch die Fahrerassistenzeinrichtung 22 eingestellt ist, erzeugt die Steuereinrichtung 18 ein Verstellsignal (S4), das den Wechsel in die in der Fig. 2 dargestellten Ruheposition der Lenkhandhabe 14 beschreibt. Im Verfahrensschritt S5 wird das erzeugte Verstellsignal an die Verstelleinrichtung 16 übertragen. Das durch die Verstelleinrichtung 16 durchzuführende Verschwenken (S6) kann beispielsweise ein Hochklappen oder Umklappen oder Rotieren der Lenkhandhabe 14 sein, beispielsweise entlang einer Verschwenkachse, die zum Beispiel parallel oder annähernd parallel zu einer Kraftfahrzeug-Querachse laufen kann. Vorzugsweise kann dabei die Lenkhandhabe 14 um beispielsweise 90 Grad nach oben geklappt werden.

Die Fig. 2 zeigt die hochgeklappte Lenkhandhabe 14, deren Unterseite nun dem Benutzer zugewandt ist, der nun auf das Anzeigeelement 31 sehen kann. Der Benutzer kann nun, im pilotierten Fahrmodus, sowohl das Anzeigeelement 31, sowie die anderen Anzeigeelemente 34, 36 benutzen.

Optional kann vorgesehen sein, dass zum Beispiel nach Einstellen des pilotierten Fahrmodus die Steuereinrichtung 18 ein Anzeigesignal erzeugt (S7), das ein Aktivieren des Anzeigeelements 31 beschreibt, und dieses dann im Verfahrensschritt S8 an die Anzeigeeinrichtung 38 überträgt (S8). Dieses Anzeigesignal kann beispielsweise eine elektronische und/oder elektrische Aktivierung der Anzeigeelemente 31, 34, 36 vorsehen.

Dadurch, dass die Lenkhandhabe 14 nun in der Ruheposition ist und weniger Sitzraum einnimmt, kann sich der Benutzer des Kraftfahrzeugs 10 beispielsweise anders hinsetzen, ohne dass er durch die Lenkhandhabe 14 in seiner Bewegungsfreiheit eingeschränkt wird. Außerdem hat er ein offensichtlich sichtbares Feedback zum erfolgten Vorgang des Einstellens des pilotierten Fahrmodus erhalten, das heißt für ihn ist durch die Ruheposition der Lenkhandhabe 14 sichtbar, dass das Kraftfahrzeug 10 pilotiert fährt.

Möchte der Benutzer beispielsweise nach einer Weile wieder in den manuellen Fahrmodus wechseln, kann er das durch die Ruheposition der Lenkhandhabe 14 freigegebene Bedienelement 29 bedienen, und dieses Bediensignal kann, wie bereits oben beschrieben, aus der Bedieneinrichtung von der Steuereinrichtung 18 empfangen werden (S1). Die Steuereinrichtung 18 erzeugt ein weiteres Steuersignal zum Einstellen des gewünschten manuellen Fahrmodus (S2), überträgt das erzeugte Steuersignal an die Fahrerassistenzeinrichtung 22 (S3), und erzeugt ein Verstellsignal (S4) zum Verschwenken der Lenkhandhabe 14 aus der Ruheposition zurück in die Gebrauchsposition. Die Lenkhandhabe 14 besteht dem Benutzer dann wieder zur Verfügung, und die Anzeigeelemente 31, 34, 36 sind wieder abgewandt und zum Beispiel auch wieder deaktiviert.

Insgesamt veranschaulicht das Ausführungsbeispiel, wie durch die Erfindung beispielhaft eine rotierende aktive und/oder autonome Lenkeinheit, also eine aktive und/oder autonome Lenkhandhabe 14, mit einem an der der Stirnseite abgewandten Oberfläche angeordneten Anzeigeelements 31, beispielsweise einem unterseitigen Display oder "Mainscreen" (also Hauptbildschirm), vorzugsweise in einem pilotierten Fahrmodus bereitgestellt wird.

Gemäß einem weiteren Ausführungsbeispiel kann die Lenkhandhabe 14, die alternativ als "Steuereinheit" bezeichnet werden kann, zum Beispiel auf der Unterseite ein großzügiges, hochauflösendes Anzeigemedium als Anzeigeelement 31 beinhalten oder aufweisen, das vorzugsweise durch die Aktivierung des autonomen oder pilotierten Fahrmodus vorzugsweise nach oben rotiert werden kann. Das Anzeigeelement 31 kann beispielsweise elektrisch und/oder mechanisch verschwenkt, also beispielsweise rotiert, werden. Mit anderen Worten schwenkt und/oder rotiert die Lenkhandhabe 14 in dem beispielhaften autonomen Fahrmodus zum Beispiel nach oben.

Ein Fahrer, also ein nun Gefahrener, hat dadurch nicht nur die benötigte Lenkhandhabe 14, also beispielsweise das benötigte Lenkrad, aus seinem Blickfeld und kann nun beispielsweise ein Entertainment-Programm auf dem Anzeigeelement 31 genießen, das beispielsweise als hochauflösendes Display ausgestaltet sein kann.

Durch die beispielhafte Rotation der Lenkeinheit kann optional ein zusätzliches Anzeigemedium, also ein zusätzliches Anzeigeelement 34, oder mehrere Anzeigeelemente 34, 46, zur Verfügung gestellt werden. Hierdurch ergibt sich, neben den bereits oben genannten Vorteile, eine neuartige Inszenierung für den Fahrer/Gefahrenen.

Gemäß einem weiteren Ausführungsbeispiel kann zum Beispiel in einem analogen oder manuellen Modus (siehe Fig. 1) der Benutzer via der Lenkeinheit, also mittels der Lenkhandhabe 14, steuern, und das Bedienelement 24, das beispielsweise als Knopf oder Button in einer Mitte der beispielhaften Lenkeinheit angeordnet sein kann, kann beispielsweise den autonomen Fahrmodus auslösen und die Lenkhandhabe 14 hochklappen.

In einem pilotierten Fahrmodus (siehe Fig. 2) kann die beispielhafte Lenkeinheit das Anzeigeelement 31, das beispielsweise als großes Medienfeld auf einer Unterseite der beispielhaften Lenkeinheit ausgestaltet sein kann, freigeben. Durch die beispielhafte Rotation können auch noch zusätzliche, optionale Bedien- und/oder Anzeigefelder freigegeben werden, also zusätzliche, optionale Anzeigeelemente 34, 36. Das Bedienelement 29, das beispielsweise als Knopf oder Button ausgestaltet sein kann, kann in der Mitte angeordnet sein, beispielsweise in der Mitte des Innenraumverkleidungselements 28, und den aktiven, analogen Fahrmodus, also den manuellen Fahrmodus, auslösen, und das beispielhafte Lenkrad wieder herunterfahren lassen.

## Patentansprüche

1. Lenkvorrichtung (12) für ein Kraftfahrzeug (14), aufweisend
- eine Lenkhandhabe (14), die eine Stirnseite aufweist, die in einer Gebrauchsposition der Lenkhandhabe (14) einem Benutzer zugewandt ist, wobei die Lenkhandhabe (14) in der Gebrauchsposition bedienbereit zum Empfangen einer Bedienhandlung zum Lenken des Kraftfahrzeugs (10) durch den Benutzer angeordnet ist, und wobei die Lenkhandhabe (14) in der Ruheposition derart angeordnet ist, dass eine in
der Gebrauchsposition dem Benutzer abgewandte Oberfläche der Lenkhandhabe (14) dem Benutzer zugewandt ist,
- ein Anzeigeelement (30) der Lenkhandhabe (14), das an einer von der Stirnseite abgewandten Seite (32) der Lenkhandhabe (14) angeordnet ist,
wobei die Lenkvorrichtung **gekennzeichnet ist durch** eine Verstelleinrichtung (16) zum Wechseln zwischen einer Gebrauchsposition der Lenkhandhabe (14) und einer Ruheposition der Lenkhandhabe (14) durch Verschwenken der Lenkhandhabe (14) und durch eine Steuereinrichtung (18), die dazu eingerichtet ist:
- ein Bediensignal aus einer Bedieneinrichtung (26, S1) zu empfangen,
- in Abhängigkeit von dem empfangenen Bediensignal ein Steuersignal zu erzeugen, das einen einzustellenden Fahrmodus durch eine Fahrerassistenzeinrichtung (22) beschreibt (S2),
- das erzeugte Steuersignal an die Fahrerassistenzeinrichtung (22) zu übertragen und dadurch den durch das Steuersignal beschriebenen Fahrmodus (S3) einzustellen,
- ein Verstellsignal zu erzeugen, das einen Wechsel zwischen einer Gebrauchsposition der Lenkhandhabe und einer Ruheposition der Lenkhandhabe (14) durch Verschwenken der Lenkhandhabe (14) beschreibt (S4),
- das erzeugte Verstellsignal an die Verstelleinrichtung (16, S5) zu übertragen,
- in Abhängigkeit von dem eingestellten Fahrmodus ein Anzeigesignal zum Aktivieren eines Anzeigeelements (31) der Lenkhandhabe (14,
S7) zu erzeugen, und
- das erzeugte Anzeigesignal an eine Anzeigeeinrichtung (38) des Kraftfahrzeugs (10) oder an das Anzeigeelement (31, S8) zu übertragen.

2. Lenkvorrichtung nach Anspruch 1, aufweisend
- ein an der Lenkhandhabe (14) angeordnetes Bedienelement (24) zum Empfangen einer Bedienhandlung des Benutzers zum Ändern eines Fahrmodus durch eine Fahrerassistenzeinrichtung (22).

3. Verfahren zum Betreiben einer Lenkvorrichtung (12) nach einem der vorgehenden Ansprüche, das Verfahren umfassend die folgenden, durch die Steuereinrichtung (18) durchgeführten Schritte:
- Empfangen eines Bediensignals aus einer Bedieneinrichtung (26, S1),
- in Abhängigkeit von dem empfangenen Bediensignal Erzeugen eines Steuersignals, das einen einzustellenden Fahrmodus durch eine Fahrerassistenzeinrichtung (22) beschreibt (S2), und
- Übertragen des erzeugten Steuersignals an die Fahrerassistenzeinrichtung (22) und dadurch Einstellen des durch das Steuersignal beschriebenen Fahrmodus (S3);
das Verfahren weiterhin aufweisend die Schritte:
- Erzeugen eines Verstellsignals, das einen Wechsel zwischen einer Gebrauchsposition der Lenkhandhabe und einer Ruheposition der Lenkhandhabe (14) durch Verschwenken der Lenkhandhabe (14) beschreibt (S4),
wobei die Lenkhandhabe (14) in der Gebrauchsposition bedienbereit zum Empfangen einer Bedienhandlung zum Lenken des Kraftfahrzeugs (10) durch den Benutzer angeordnet ist, und wobei die Lenkhandhabe (14) in der Ruheposition derart angeordnet ist, das eine in der Gebrauchsposition dem Benutzer abgewandte Oberfläche der Lenkhandhabe (14) dem Benutzer zugewandt ist,
- Übertragen des erzeugten Verstellsignals an die Verstelleinrichtung (16, S5),
- in Abhängigkeit von dem eingestellten Fahrmodus Erzeugen eines Anzeigesignals zum Aktivieren eines Anzeigeelements (30) der Lenkhandhabe (14, S7), und
- Übertragen des erzeugten Anzeigesignals an eine Anzeigeeinrichtung (38) des Kraftfahrzeugs (10) oder an das Anzeigeelement (31, S8).

4. Verfahren nach Anspruch 3, wobei der durch das Verstellsignal beschriebene Wechsel zwischen der Gebrauchsposition und der Ruheposition ein Verschwenken der Lenkhandhabe (14) entlang einer eine Kraftfahrzeug-Längsachse und eine Kraftfahrzeug-Hochachse schneidenden Verschwenkachse, die vorzugsweise in einer Ebene verläuft, die durch die Kraftfahrzeug-Längsachse und eine Kraftfahrzeug-Querachse gebildet wird, vorzugsweise wobei die Verschwenkachse parallel zu der Kraftfahrzeug-Querachse oder im Wesentlichen parallel zu der Kraftfahrzeug-Querachse verläuft.

5. Steuereinrichtung (18), die dazu eingerichtet ist, ein Verfahren nach einem der Ansprüche 3 oder 4 durchzuführen, vorzugsweise wobei die
Steuereinrichtung (18) eine Prozessoreinrichtung (23) aufweist.

6. Kraftfahrzeug (10), **gekennzeichnet durch** eine Lenkvorrichtung (12) nach einem der Ansprüche 1 oder 2, wobei das
Anzeigeelement (31) in einer Gebrauchsposition der Lenkhandhabe (14) an einer einem Benutzer abgewandten Oberfläche der Lenkhandhabe (14) angeordnet ist, vorzugsweise wobei eine Anzeigeeinrichtung (38) des Kraftfahrzeugs (10) mindestens ein weiteres Anzeigeelement (34, 36) aufweist, das in der Gebrauchsposition der Lenkhandhabe (14) durch die Lenkhandhabe (14) zumindest teilweise verdeckt und in der Ruheposition der Lenkhandhabe (14) dem Benutzer zugänglich ist.

7. Kraftfahrzeug (10) nach Anspruch 6, **gekennzeichnet durch**
eine Verstelleinrichtung (16) zum Wechseln zwischen einer Gebrauchsposition der Lenkhandhabe (14) und einer Ruheposition der Lenkhandhabe (14) durch Verschwenken der Lenkhandhabe (14).

## Claims

1. Steering device (12) for a motor vehicle (14), having
- a steering handle (14), which has an end face, which in a position of use of the steering handle (14) faces a user, wherein the steering handle (14) in the position of use is arranged ready for use for receiving an operating action for steering the motor vehicle (10) by the user, and wherein the steering handle (14) is arranged in the position of rest such that a surface of the steering handle (14) facing away from the user in the position of use faces the user,
- a display element (30) of the steering handle (14), which is arranged on a side (32) of the steering handle (14) facing away from the end face,
wherein the steering device is **characterised by** an adjusting device (16) for changing between a use position of the steering handle (14) and a position of rest of the steering handle (14) by pivoting the steering handle (14) and by a control unit (18) which is configured:
- to receive an operating signal from an operating device (26, S1),
- to generate a control signal as a function of the received operating signal which describes a driving mode to be set by a driver assistance unit (22) (S2),
- to transmit the generated control signal to the driver assistance unit (22) and thereby set the driving mode described by the control signal (S3),
- to generate an adjustment signal which describes a change between a position of use of the steering handle and a position of rest of the steering handle (14) by pivoting the steering handle (14) (S4),
- to transmit the generated adjustment signal to the adjusting device (16, S5),
- to generate a display signal for activating a display element (31) of the steering handle (14, S7) as a function of the set driving mode, and
- to transmit the generated display signal to a display device (38) of the motor vehicle (10) or to the display element (31, S8).

2. Steering device according to claim 1, having
- an operating element (24) arranged on the steering handle (14) for receiving an operating action of a user for changing a driving mode by a driver assistance unit (22).

3. Method for operating a steering device (12) according to any of the preceding claims, the method comprising the following steps performed by the control unit (18):
- receiving an operating signal from an operating device (26, S1),
- generating a control signal as a function of the received operating signal, which control signal describes a driving mode to be set by a driver assistance unit (22) (S2), and
- transmitting the generated control signal to the driver assistance unit (22) and thereby set the driving mode (S3) described by the control signal;
the method further comprising the steps:
- generating an adjustment signal which describes a change between a position of use of the steering handle and a position of rest of the steering handle (14) by pivoting the steering handle (14) (S4),
wherein the steering handle (14) is arranged in the position of use ready to receive an operating action for steering the motor vehicle (10) by the user, and wherein the steering handle (14) is arranged in the position of rest such that a surface of the steering handle (14) facing away from the user in the position of use faces the user, and
- transmitting the generated adjustment signal to the adjusting device (16, S5),
- as a function of the set driving mode generating a display signal for activating a display element (30) of the steering handle (14, S7), and
- transmitting the generated display signal to a display device (38) of the motor vehicle (10) or to the display element (31, S8).

4. Method according to claim 3, wherein the change between the position of use and the position of rest described by the adjustment signal comprises pivoting the steering handle (14) along a pivot axis intersecting a motor vehicle longitudinal axis and a motor vehicle vertical axis, which is preferably in a plane formed by the motor vehicle longitudinal axis and a motor vehicle transverse axis, preferably wherein the pivot axis is parallel to the motor vehicle transverse axis or substantially parallel to the motor vehicle transverse axis.

5. Control unit (18), which is configured to perform a method according to any of claims 3 or 4, preferably wherein the control unit (18) has a processor device (23).

6. Motor vehicle (10), **characterised by**
a steering device (12) according to any of claims 1 or 2, wherein the display element (31) is arranged in a position of use of the steering handle (14) on a surface of the steering handle (14) facing away from a user, preferably wherein a display device (38) of the motor vehicle (10) has at least one further display element (34, 36) which is at least partially concealed by the steering handle (14) in the position of use of the steering handle (14) and is accessible to the user in the position of rest of the steering handle (14).

7. Motor vehicle (10) according to claim 6, **characterised by** an adjusting device (16) for changing between a position of use of the steering handle (14) and a position of rest of the steering handle (14) by pivoting the steering handle (14).

## Revendications

1. Dispositif de braquage (12) pour un véhicule automobile (14), présentant
- un volant de braquage (14) qui présente un côté frontal qui, lorsque le volant de braquage (14) est dans une position d'utilisation, fait face à un utilisateur, dans lequel le volant de braquage (14) étant agencé dans la position d'utilisation prêt à recevoir une manipulation d'actionnement pour un braquage du véhicule automobile (10) par l'utilisateur, et dans lequel le volant de braquage (14) est agencé dans la position de repos de telle sorte qu'une surface du volant de braquage (14) orientée à l'opposé de l'utilisateur dans la position d'utilisation soit orientée vers l'utilisateur,
- un élément d'affichage (30) du volant de braquage (14), qui est agencé sur un côté (32) du volant de braquage (14) opposé au côté frontal,
dans lequel le dispositif de braquage est **caractérisé par** un dispositif de déplacement (16) pour passer d'une position d'utilisation du volant de braquage (14) à une position de repos du volant de braquage (14) par pivotement du volant de braquage (14) et par un appareil de commande (18) qui est adapté pour :
- recevoir un signal d'actionnement depuis un dispositif d'actionnement (26, S1),
- en fonction du signal d'actionnement reçu, produire un signal de commande qui décrit (S2) un mode de conduite à régler par un dispositif d'aide à la conduite (22),
- transmettre (S3) le signal de commande produit au dispositif d'aide à la conduite (22) et régler ainsi le mode de conduite décrit par le signal de commande,
- produire un signal de déplacement qui décrit (S4) un changement entre une position d'utilisation du volant de braquage et une position de repos du volant de braquage (14) par pivotement du volant de braquage (14),
- transmettre le signal de déplacement produit au dispositif de déplacement (16, S5),
- produire un signal d'affichage pour activer un élément d'affichage (31) du volant de braquage (14, S7) en fonction du mode de conduite réglé, et
- transmettre le signal d'affichage produit à un dispositif d'affichage (38) du véhicule automobile (10) ou à l'élément d'affichage (31, S8).

2. Dispositif de braquage selon la revendication 1, présentant
- un élément d'actionnement (24) agencé sur le volant de braquage (14) pour recevoir une manipulation d'actionnement de l'utilisateur afin de changer un mode de conduite par un dispositif d'aide à la conduite (22).

3. Procédé de commande d'un dispositif de braquage (12) selon l'une quelconque des revendications précédentes, le procédé comprenant les étapes suivantes exécutées par l'appareil de commande (18) :
- recevoir un signal d'actionnement depuis un dispositif d'actionnement (26, S1),
- produire, en fonction du signal d'actionnement reçu, un signal de commande qui décrit (S2) un mode de conduite à régler par un dispositif d'aide à la conduite (22), et
- transmettre le signal de commande produit au dispositif d'aide à la conduite (22) et régler ainsi le mode de conduite (S3) décrit par le signal de commande ;
le procédé présentant en outre les étapes consistant à :
- produire un signal de déplacement qui décrit un changement entre une position d'utilisation du volant de braquage et une position de repos du volant de braquage (14) par pivotement du volant de braquage (14) (S4),
dans lequel le volant de braquage (14), dans la position d'utilisation, est agencé de manière fonctionnelle pour recevoir une manipulation d'actionnement pour un braquage du véhicule à moteur (10) par l'utilisateur, et dans lequel le volant de braquage (14), dans la position de repos, est agencé de telle sorte qu'une surface du volant de braquage (14) opposée à l'utilisateur dans la position d'utilisation fait face à l'utilisateur,
- transmettre le signal de déplacement produit au dispositif de déplacement (16, S5),
- en fonction du mode de conduite réglé, produire un signal d'affichage pour activer un élément d'affichage (30) du volant de braquage (14, S7), et
- transmettre le signal d'affichage produit à un dispositif d'affichage (38) du véhicule automobile (10) ou à l'élément d'affichage (31, S8).

4. Procédé selon la revendication 3, dans lequel le changement entre la position d'utilisation et la position de repos décrite par le signal de déplacement est un pivotement du volant de braquage (14) le long d'un axe de pivotement recoupant un axe longitudinal du véhicule automobile et un axe vertical du véhicule automobile, qui s'étend de préférence dans un plan formé par l'axe longitudinal du véhicule automobile et un axe transversal du véhicule automobile, l'axe de pivotement s'étendant de préférence parallèlement à l'axe transversal du véhicule automobile ou sensiblement parallèlement à l'axe transversal du véhicule automobile.

5. Appareil de commande (18) conçu pour mettre en œuvre un procédé selon l'une quelconque des revendications 3 ou 4, dans lequel de préférence l'appareil de commande (18) présente un appareil à processeur (23).

6. Véhicule automobile (10), **caractérisé par** un dispositif de braquage (12) selon l'une quelconque des revendications 1 ou 2, dans lequel l'élément d'affichage (31) est agencé, dans une position d'utilisation du volant de braquage (14), sur une surface du volant de braquage (14) opposée à un utilisateur, de préférence dans lequel un dispositif d'affichage (38) du véhicule automobile (10) présente au moins un élément d'affichage supplémentaire (34, 36) qui, dans la position d'utilisation du volant de braquage (14), est au moins partiellement recouvert par le volant de braquage (14) et qui, dans la position de repos du volant de braquage (14), est accessible à l'utilisateur.

7. Véhicule automobile (10) selon la revendication 6, **caractérisé par** un dispositif de déplacement (16) pour passer d'une position d'utilisation du volant de braquage (14) à une position de repos du volant de braquage (14) par pivotement du volant de braquage (14).
